# EUROPEAN PATENT SPECIFICATION

(11) **EP 3 910 703 B1**
(45) Date of publication and mention of the grant of the patent: **15.10.2025**
(21) Application number: 21195132.2
(22) Date of filing: 06.09.2021
(51) Int. Cl.: H01M 4/13, H01M 4/139, H01M 10/0525, H01M 10/42, H01M 50/411, H01M 50/431, H01M 50/451, H01M 10/0587, H01M 50/46, H01M 50/489, H01M 50/105, H01M 50/414, H01M 50/429

(54) **ELECTROCHEMICAL APPARATUS AND ELECTRONIC APPARATUS**
ELEKTROCHEMISCHE VORRICHTUNG UND ELEKTRONISCHE VORRICHTUNG
APPAREIL ÉLECTROCHIMIQUE ET APPAREIL ÉLECTRONIQUE

(30) Priority: 14.12.2020 CN 202011474081
(43) Date of publication of application: 17.11.2021
(73) Proprietor: NINGDE AMPEREX TECHNOLOGY LIMITED, Ningde City, Fujian Province 352100 (CN)
(72) Inventor: HUO, Taotao, Dongguan City, Guangdong Province, 523000 (CN)
(74) Representative: Icosa

(56) References cited:
- EP-A1- 3 244 475
- EP-A2- 3 588 621
- JP-B2- 5 804 712
- KR-A- 20060 112 738
- KR-A- 20150 051 498
- KR-B1- 101 557 302

## Description

### TECHNICAL FIELD

This application relates to the field of electrochemical technology, and specifically, to an electrochemical apparatus and an electronic apparatus containing the electrochemical apparatus.

### BACKGROUND

Lithium-ion batteries (electrochemical apparatuses) have many advantages, such as high energy density, long cycle life, high nominal voltage, low self-discharge rate, small size, and small weight. They are widely applied in consumer electronics, electric vehicles, electric two-wheelers, energy storage and other fields. With the rapid development of electric vehicles and mobile electronic devices in recent years, people have increasingly high requirements for the service life of lithium-ion batteries. However, currently, as the number of cycles of the lithium-ion batteries increases, electrode assemblies inside the lithium-ion batteries gradually deform, making reliability of their packaging decrease, which affects the improvement of the service life of lithium-ion batteries. Therefore, there is an urgent need for a technical solution low in cost, which can avoid deformation of lithium ion batteries during use, and provides high packaging reliability.

KR20060112738A discloses a wound electrode assembly, accommodated in a pouch. Said would electrode assembly comprises first and a second separators, one of said separators being present on the outermost surface of the would electrode assembly. Once the electrode assembly is inserted to the pouch-type casing, an electrolyte is injected.

### SUMMARY

In view of a problem that existing lithium-ion batteries cannot avoid deformation and ensure packaging reliability, this application provides an electrochemical apparatus, including a first electrode plate, a second electrode plate, a first separator, and a second separator, where the first separator includes a first porous substrate, the second electrode plate includes a second porous substrate, and the first electrode plate, the first separator, the second electrode plate and the second separator are stacked in sequence to form an electrode assembly; and at least one surface of the first porous substrate is provided with a polymer bonding layer, and neither surface of the second porous substrate is provided with the polymer bonding layer.

In some embodiments, both surfaces of the first porous substrate are provided with a polymer bonding layer. According to the invention, neither surface of the second porous substrate is provided with a polymer bonding layer. In some embodiments, only one surface of the first porous substrate is provided with a polymer bonding, however neither surface of the second porous substrate is provided with a polymer bonding layer.

In some embodiments, an inorganic material layer is further arranged between the first porous substrate and the polymer bonding layer, and a surface of the second porous substrate is provided with no inorganic material layer.

In some embodiments, the first electrode plate is a positive electrode plate, and the second electrode plate is a negative electrode plate, or the first electrode plate is a negative electrode plate, and the second electrode plate is a positive electrode plate. An area density of the polymer bonding layer is 0.5mg/1540.25mm² to 10mg/1540.25mm².

In some embodiments, the first porous substrate and the second porous substrate may be each independently a polymer film, a multilayer polymer film, or a non-woven fabric composed of at least one polymer selected from the following: polyethylene, polypropylene, polyethylene terephthalate, polydiformylphenylenediamine, polybutylene terephthalate, polyester, polyacetal, polyamide, polycarbonate, polyimide, polyether-ether-ketone, polyetherketoneketone, polyether ketone, polyamideimide, PBI, polyethersulfone, polyphenylene oxide, cycloolefin copolymers, polyphenylene sulfide, or polyvinyl naphthaline.

In some embodiments, the polymer bonding layer includes a polymer, and the polymer includes at least one of the following: vinylidene fluoride-hexafluoropropylene copolymer, vinylidene fluoride-trichloroethylene copolymer, polyacrylate, polyacrylic acid, polyvinylpyrrolidone, polyacrylonitrile, polyvinylpyrrolidone, polyvinyl acetate, ethylene-acetic acid ethen copolymer, polyimide, polyoxyethylene, cellulose acetate, cellulose acetate butyrate, cellulose acetate propionate, cyanoethyl amylopectin, cyanethyl polyvinyl alcohol, cyanoethyl cellulose, cyanethyl sucrose, amylopectin, carboxymethyl cellulose, sodium carboxymethyl cellulose, lithium carboxymethyl cellulose, acrylonitrile-styrene-butadiene copolymer, polyvinyl alcohol, butadiene-styrene copolymer, or polyvinylidene fluoride.

In some embodiments, the inorganic material layer includes an inorganic particle, and the inorganic particle includes at least one of the following: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, titanium lithium phosphate, or lanthanum titanate lithium.

In some embodiments, the electrode assembly has a winding structure, and an outermost circle of the electrode assembly is the second porous substrate. This application further provides an electronic apparatus, including the electrochemical apparatus in this application.

The technical solutions of this application can achieve the following beneficial effects:

In the electrochemical apparatus employing electrode assemblies made by stacking or winding in this application, a positive electrode plate and a negative electrode plate are separated through different arrangements of polymer bonding layers on a first separator and a second separator. This helps shape the electrode assembly and release a stress at corner, thereby inhibiting deformation of the electrochemical apparatus and improving packaging reliability.

### BRIEF DESCRIPTION OF DRAWINGS

Implementations of the present disclosure will now be described, by way of embodiments, with reference to the attached figures.
FIG. 1 is a schematic diagram of a winding structure of an electrode assembly in an electrochemical apparatus according to this application;
FIG. 2 is a schematic diagram of a stacking manner of an electrode assembly in an electrochemical apparatus according to this application;
FIG. 3 is a schematic diagram of a winding manner of an electrode assembly in an electrochemical apparatus according to this application;
FIG. 4 is a schematic diagram of a stacking manner of an electrode assembly in an electrochemical apparatus according to this application;
FIG. 5 is a schematic diagram of a stacking manner of an electrode assembly in an electrochemical apparatus according to this application;
FIG. 6 is a schematic diagram of a stacking manner of an electrode assembly in an electrochemical apparatus according to this application;
FIG. 7 is a schematic diagram of an implementation of an electrode assembly in an electrochemical apparatus according to this application;
FIG. 8 is a schematic diagram of an implementation of an electrode assembly in an electrochemical apparatus according to this application;
FIG. 9 is a schematic diagram of an implementation of an electrode assembly in an electrochemical apparatus according to this application;
FIG. 10 is a schematic diagram of an implementation of an electrode assembly in an electrochemical apparatus according to this application.

Reference signs are described as follows:
1: first electrode plate
2: second electrode plate
3: first separator
30: first porous substrate
31: polymer bonding layer
32: polymer bonding layer
34: inorganic material layer
4: second separator
40: second porous substrate
41: polymer bonding layer
5: first tab
6: second tab
7: scroll wheel; and
8: winding core

### DETAILED DESCRIPTION

To make the objectives, technical solutions, and advantages of this application clearer, the following clearly and optionally describes the technical solutions in this application with reference to the embodiments of this application. Apparently, the described embodiments are some but not all of the embodiments of the present invention.

This application provides an electrochemical apparatus, including a first electrode plate, a second electrode plate, a first separator, and a second separator, where the first separator includes a first porous substrate, the second electrode plate includes a second porous substrate, and the first electrode plate, the first separator, the second electrode plate and the second separator are stacked in sequence to form an electrode assembly; and at least one surface of the first porous substrate is provided with a polymer bonding layer, and at least one surface of the second porous substrate is provided with no polymer bonding layer.

In this application, the first electrode plate may be a positive electrode plate or a negative electrode plate. Similarly, the second electrode plate may be a positive electrode plate or a negative electrode plate. The first electrode plate and the second electrode plate have opposite polarities. For example, when the first electrode plate is a positive electrode plate, the second electrode plate is a negative electrode plate; when the first electrode plate is a negative electrode plate, the second electrode plate is a positive electrode plate. The electrode assembly may be formed by stacking, folding or winding, and the first electrode plate and the second electrode plate are separated from each other by the first separator provided with a polymer bonding layer. After an electrode assembly is formed by winding, the first separator provided with a polymer bonding layer helps to release a stress at corner of the electrode assembly. In this application, the polymer bonding layer is formed by arranging a polymer binder on a surface of the first separator. The second separator can also be arranged between the first electrode plate and the second electrode plate. The first separator may be or may not be connected with the second separator. Preferably, the first separator is not connected with the second separator.

The first porous substrate and the second porous substrate may be porous substrate materials commonly used in the art.

As described above, in the electrochemical apparatus in this application, at least one surface of the first porous substrate of the first separator between the positive electrode plate and the negative electrode plate is provided with a polymer bonding layer. Therefore, at least one surface of the positive electrode plate or the negative electrode plate is in direct contact with the polymer bonding layer. Specifically, both surfaces of the first porous substrate are provided with a polymer bonding layer, or only one surface of the first porous substrate is provided with a polymer bonding layer.

In an implementation of the electrochemical apparatus in this application, neither surface of the second porous substrate is provided with a polymer bonding layer. In this case, the second separator is merely a second substrate, and neither the positive electrode plate nor the negative electrode plate functions as a binder.

In an implementation of the electrochemical apparatus in this application, only one surface of the second porous substrate is provided with no polymer bonding layer. In a more specific implementation, a surface of the second porous substrate facing away from the first separator is provided with no polymer bonding layer. In this case, the surface without a polymer bonding layer is not in direct contact with an electrolyte, which can alleviate a gel problem caused by dissolution of a coating by the electrolyte.

In an implementation of the electrochemical apparatus in this application, only one surface of the first porous substrate is provided with a polymer bonding layer, and only one surface of the second porous substrate is provided with no polymer bonding layer. In such embodiment, a polymer bonding layer may be arranged on any one surface of the first porous substrate and any one surface of the second porous substrate.

The polymer bonding layer binds adjacent functional layers together, and an area density of the polymer bonding layer arranged on a surface of the first porous substrate or the second porous substrate significantly affects an adhesion strength. In this application, the area density of the polymer bonding layer is 0.5mg/1540.25mm² to 10mg/1540.25mm². An excessively small area density of the polymer bonding layer will lead to a poor bonding effect. Although a higher area density of the polymer bonding layer can improve the adhesion strength, under a condition that an effective adhesion strength is ensured, an excessively high area density of the polymer bonding layer will lead to waste of materials and increased cost. Therefore, the area density of the polymer bonding layer is preferably 0.5mg/1540.25mm² to 10mg/1540.25mm².

In the electrochemical apparatus in this application, the first porous substrate and the second porous substrate may be each independently a polymer film, a multilayer polymer film, or a non-woven fabric composed of at least one polymer selected from the following: polyethylene, polypropylene, polyethylene terephthalate, polydiformylphenylenediamine, polybutylene terephthalate, polyester, polyacetal, polyamide, polycarbonate, polyimide, polyether-ether-ketone, polyetherketoneketone, polyether ketone, polyamideimide, PBI, polyethersulfone, polyphenylene oxide, cycloolefin copolymers, polyphenylene sulfide, or polyvinyl naphthaline.

Viscosity of the polymer bonding layer allows the positive electrode plate or the negative electrode plate to be bound to an adjacent separator, helping to shape the electrode assembly. In addition, elasticity of the polymer bonding layer helps to release a stress at corner of the wound electrode assembly, thereby inhibiting deformation and improving stability and safety of the electrode assembly. The polymer bonding layer includes a binder composed of a polymer, and the polymer includes at least one of the following: vinylidene fluoride-hexafluoropropylene copolymer, vinylidene fluoride-trichloroethylene copolymer, polyacrylate, polyacrylic acid, polyvinylpyrrolidone, polyacrylonitrile, polyvinylpyrrolidone, polyvinyl acetate, ethylene-acetic acid ethen copolymer, polyimide, polyoxyethylene, cellulose acetate, cellulose acetate butyrate, cellulose acetate propionate, cyanoethyl amylopectin, cyanethyl polyvinyl alcohol, cyanoethyl cellulose, cyanethyl sucrose, amylopectin, carboxymethyl cellulose, sodium carboxymethyl cellulose, lithium carboxymethyl cellulose, acrylonitrile-styrene-butadiene copolymer, polyvinyl alcohol, butadiene-styrene copolymer, or polyvinylidene fluoride.

In order to improve a mechanical strength and thermal stability of the polymer bonding layer, an inorganic material layer may be arranged between the first porous substrate and the polymer bonding layer. The inorganic material layer includes an inorganic particle, and the inorganic particle includes at least one of the following: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, titanium lithium phosphate, or lanthanum titanate lithium.

In an implementation of the electrochemical apparatus in this application, a surface of the second porous substrate is provided with no inorganic material layer. In some cases, a surface of the second porous substrate may be provided with no inorganic material layer, so as to reduce thickness of the second separator and increase an energy density of the electrochemical apparatus.

In the electrochemical apparatus in this application, the positive electrode plate includes a positive electrode current collector and a positive electrode active material layer arranged on the positive electrode current collector, and the positive electrode active material layer includes a positive electrode active material, a binder and a conductive agent. The positive electrode active material includes a compound that reversibly intercalates and deintercalates a lithium ion. The positive electrode active material may include a composite oxide. The composite oxide includes lithium and at least one element selected from cobalt, manganese, or nickel. Specific types of the positive electrode active materials are not subject to specific limitations, and can be selected according to requirements. The positive electrode active material is selected from at least one of lithium cobalt oxide LiCoO₂ (LCO), lithium-nickel-manganese cobalt (811, 712, 622, 523, 111), lithium nickel cobalt aluminate, lithium iron phosphate, lithium manganese iron phosphate, or lithium manganate oxide. These positive electrode active materials may be used alone, or two or more types may be used in combination. The foregoing positive electrode active materials may be bulk-doped.

The positive electrode active material may have a coating on its surface, or may be mixed with another compound having a same composition in the coating. The coating may include at least one compound of a coating element selected from oxides, hydroxides, hydroxyl oxides, oxycarbonates, and hydroxy carbonates of the coating element. The compound used for the coating may be amorphous or crystalline. The coating element may include one or more of Mg, Al, Co, K, Na, Ca, Si, Ti, V, Sn, Ge, Ga, B, A or Zr. The coating can be applied by any method as long as the method does not adversely affect the performance of the positive electrode active material. For example, the method may include any coating method well known to a person of ordinary skill in the art, such as spraying or dipping.

The binder can enhance bonding between particles of the positive electrode active material, and bonding between the positive electrode active material and the current collector. Non-limiting examples of the binder include polyvinyl alcohol, hydroxypropyl cellulose, diacetyl cellulose, polyvinyl chloride, carboxylated polyvinyl chloride, polyvinylidene fluoride, polyacrylate, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, and the like.

The positive electrode active material layer includes a conductive agent, making the positive electrode plate conductive. The conductive agent may include any conductive material that causes no chemical change. Non-limiting examples of the conductive agent include a carbon-based material (for example, carbon black, acetylene black, Ketjen black, carbon fiber, an acarbon nanotube, or graphene), a metal-based material (for example, metal powder and metal fiber, including, for example, copper, nickel, aluminum, or silver), a conductive polymer (for example, a polyphenylene derivative), and a mixture thereof.

The positive electrode current collector may be, but is not limited to, an aluminum foil, a copper foil, or a nickel foil.

The negative electrode plate includes a negative electrode current collector and a negative electrode active material layer arranged on the current collector, and the negative electrode active material layer includes negative electrode active materials. The specific types of the negative electrode active material are not subject to specific restrictions, and can be selected according to requirements. Specifically, the negative electrode active material is selected from one or more of natural graphite, artificial graphite, mesocarbon microbeads (MCMB for short), hard carbon, soft carbon, silicon, a silicon-carbon composite, a Li-Sn alloy, a Li-Sn-O alloy, Sn, SnO, SnO₂, spinel-structure lithiated TiO₂-Li₄Ti₅O₁₂, and a Li-Al alloy. Non-limiting examples of the carbon material include crystalline carbon, amorphous carbon, or a mixture thereof. The crystalline carbon may be amorphous, plate-shaped, flake-shaped, spherical or fiber-shaped natural graphite or artificial graphite. The amorphous carbon may be a mesophase pitch carbonization product, burnt coke, or the like.

The negative electrode active material layer may include a binder. The binder improves bonding of the negative electrode active material particles with each other and bonding of the negative electrode active material with the current collector. Non-limiting examples of the binder include polyvinyl alcohol, carboxymethyl cellulose, hydroxypropyl cellulose, diacetyl cellulose, polyvinyl chloride, carboxylated polyvinyl chloride, polyvinylidene fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, and the like.

The negative electrode active material layer includes a conductive agent. The conductive agent may include any conductive material that causes no chemical change. Non-limiting examples of the conductive material include a carbon-based material (for example, carbon black, acetylene black, Ketjen black, carbon fiber, or an acarbon nanotube), a metal-based material (for example, metal powder and metal fiber, such as copper, nickel, aluminum, or silver), a conductive polymer (for example, a polyphenylene derivative), and a mixture thereof.

The negative electrode current collector may be selected from copper foil, nickel foil, stainless steel foil, titanium foil, nickel foam, copper foam, a polymer substrate coated with conductive metal, and any combination thereof.

In this application, the electrochemical apparatus may be a secondary battery. Based on the type of swinging, the electrochemical apparatus in this application may be a lithium-ion battery, a sodium-ion battery, or a magnesium-ion battery. This application uses a lithium-ion battery as an example for detailed description. Based on the form of an electrolyte, the electrochemical apparatus in this application may be a liquid battery, a gel battery, or a solid battery.

In a lithium-ion battery, a packaging material may be an aluminum-plastic film. In a packing process, a housing is used. Due to a low hardness, the aluminum-plastic film basically has no restriction on the electrode assembly. A stress caused by expansion of an electrode plate of the lithium-ion battery during charging and discharging cannot be released at corner, leaving the lithium-ion battery prone to deform, and its width and thickness uncontrollable. Therefore, for most soft-packed lithium-ion batteries of a winding structure, a coating separator with a bonding function is used to bind and shape the electrode plates. In addition, compressibility of the organic coating allows the stress to be released at corner, thereby inhibiting deformation of the electrode assembly. However, most of the organic compound coatings with the bonding function are polymer bonding layers. The organic coating easily interacts with some solvents or additives in the electrolyte to form gel during a high-temperature chemical conversion process. The formed gel may adhere to a sealing zone on the edge of an airbag. Packaging film sealing mainly depends on fusion and bonding of polypropylene (PP) in an inner layer of an aluminum-plastic film under high temperature and high pressure. The gel in the sealing zone is between the polypropylene layers of the aluminum-plastic film on both sides, affecting the fusion and bonding effect of the polypropylene, and leading to insufficient package strength. As a result, a packaging life of the airbag edge is affected, or even an electrolyte spill occurs due to incomplete sealing.

Using a porous substrate with both surfaces coated with polymer bonding layers, or a porous substrate with neither surface provided with a polymer bonding layer cannot address the deformation and packaging reliability issues of the electrode assembly at the same time. The lithium-ion battery deformation will cause interface deterioration and drastic capacity decrease during cycling, or even cause safety risks such as lithium precipitation. An insufficient packaging strength will seriously reduce the packaging life of the lithium-ion battery and expose the battery at risk of electrolyte spill.

This application separates a positive electrode plate and a negative electrode plate through a first separator provided with a polymer binder, and utilizes flexibility of a polymer bonding layer to shape the electrode assembly and release a stress at corner, thereby improving packaging reliability and extending the service life of soft-packed lithium-ion batteries.

In this application, at least one surface of the second porous substrate is provided with no polymer bonding layer. In other words, the second separator may be a separator with neither surface provided with a polymer bonding layer, or with only an inner surface (facing towards a center of the electrode assembly) provided with a polymer bonding layer. In the electrochemical apparatus of this application, an outermost side of the wound electrode assembly ends with a porous substrate with neither surface provided with a polymer bonding layer. There is no polymer binder on a surface of the electrode assembly in contact with the electrolyte, preventing the polymer bonding layer from being dissolved in the electrolyte, and reducing gel formation during a chemical conversion process of the lithium-ion battery. The formed gel easily adheres to other objects, affecting the polypropylene packaging operation inside the aluminum-plastic film in a subsequent outer packaging process of the wound electrode assembly, and reducing the packaging reliability of the lithium-ion battery.

The following describes an electrochemical apparatus in this application in detail with reference to the accompanying drawings and embodiments.

To verify the advantages of the electrochemical apparatus in this application, electrode assembly deformation and gel formation of the lithium-ion battery are tested.

### Example 1

### Preparation of a positive electrode plate

Lithium cobaltate as a positive electrode active material, acetylene black, and polyvinylidene fluoride (PVDF) were mixed at a mass ratio of 94:3:3, added with a solvent N-methylpyrrolidone (NMP), and stirred to obtain a slurry with a solid content of 75%. The slurry was uniformly coated on a surface of an aluminum foil with a thickness of 12 µm. After drying at 90°C and cold pressing, a positive electrode plate with a 100 µm-thick positive electrode active material layer was obtained. Then the foregoing steps were repeated on the other surface of the positive electrode plate to obtain the positive electrode plate with both surfaces coated with a positive electrode active material layer. The positive electrode plate was cut and tabs were welded on it for use.

### Preparation of a first separator

The propylene-vinylidene fluoride copolymer, N-dodecyl dimethylamine, and polydimethylsiloxane were mixed at a mass ratio of 90:3:7 to obtain a mixture, and then the mixture was dissolved in acetone to obtain a binder slurry with a solid content of 40%. The binder slurry was uniformly coated on both surfaces of the first porous substrate (with a thickness of 9 µm and a porosity of 36%, made from polyethylene) to form a polymer bonding layer with a thickness of 2 µm.

### Preparation of a negative electrode plate

Artificial graphite as a negative electrode active material, acetylene black, styrene-butadiene rubber, and sodium carboxy methyl cellulose were mixed at a mass ratio of 96:1:1.5:1.5, added with deionized water as a solvent, and stirred to obtain a slurry with a solid content of 70%. The slurry was uniformly coated on a surface of a copper foil with a thickness of 8 µm. After drying at 110°C and cold pressing, a negative electrode plate with one surface coated with a 150 µm-thick negative electrode active material layer was obtained. Then the foregoing steps were repeated on the other surface of the negative electrode plate to obtain the negative electrode plate with both surfaces coated with a positive electrode active material layer. The negative electrode plate was cut and tabs were welded on it for use.

### Second separator

The second porous substrate was 9 µm thick, made from polyethylene, and had a porosity of 36%.

### Preparation of an electrolyte

In an environment with a water content less than 10 ppm, non-aqueous organic solvents ethylene carbonate (EC), diethyl carbonate (DEC), propylene carbonate (PC), propyl propionate (PP) and vinylene carbonate (VC) were mixed at a mass ratio of 20:30:20:28:2, and then lithium hexafluorophosphate (LiPF₆) was added to the non-aqueous organic solvent mixture and mixed uniformly to obtain an electrolyte. A mass ratio of LiPF₆ to the non-aqueous organic solvent was 8:92.

### Preparation of an electrode assembly

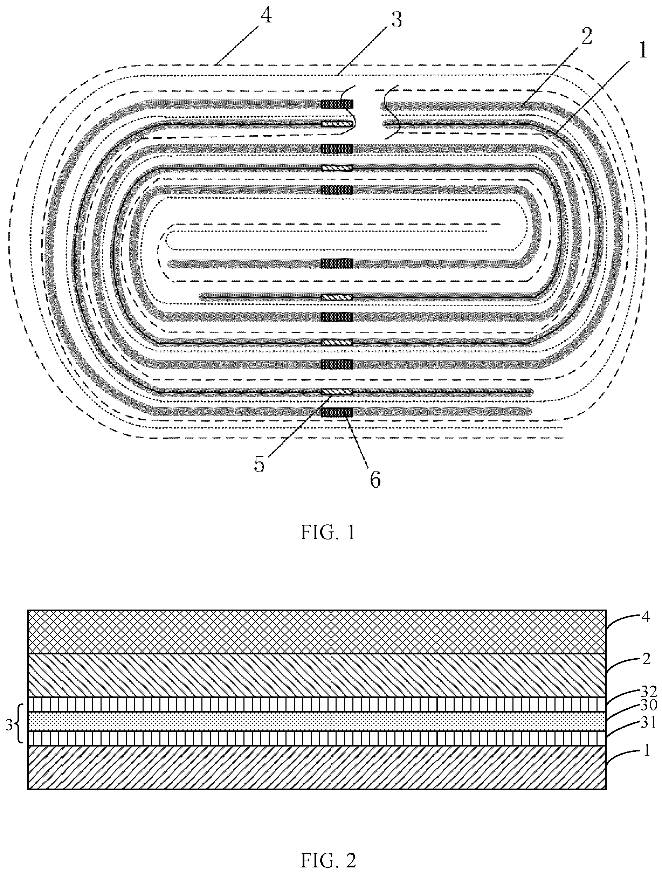

FIG. 1 shows a cross section of a wound electrode assembly of a lithium-ion battery. The cross-section of the wound electrode assembly of the lithium-ion battery includes a first electrode plate 1, a first separator 3, a second electrode plate 2, and a second separator 4 that are arranged in sequence, multiple first tabs 5 arranged on the first electrode plate 1, and multiple second tabs 6 arranged on the second electrode plate 2. When the winding of all functional layers of the electrode assembly ends, the second separator 4 is on the outermost side.

FIG. 2 is a schematic diagram showing stacking of all layers of the wound electrode assembly of the lithium-ion battery in FIG. 1. In FIG. 2, the first electrode plate 1 is a positive electrode plate, the second electrode plate 2 is a negative electrode plate, the first separator 3 includes a first porous substrate 30, and both surfaces of the first porous substrate 30 are coated with a polymer bonding layer 31 and a polymer bonding layer 32 with an area density of 0.5mg/1540.25mm². The second separator 4 includes a second porous substrate 40, and neither surface of the second porous substrate 40 is coated with a polymer bonding layer.

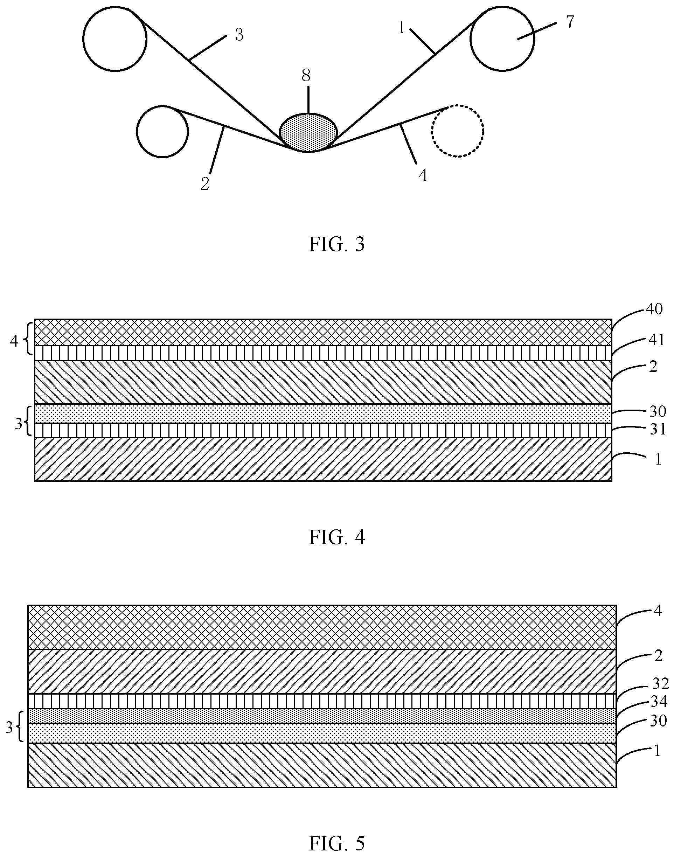

FIG. 3 shows a preparation process of a wound electrode assembly. In a winding apparatus, the first separator 3 (a separator provided with a polymer bonding layer) and the second separator 4 (a separator provided with no polymer bonding layer) enter from both sides of the winding apparatus, and the second separator 4 enters from an outer side. When a winding core 8 rotates, the first electrode plate 1 (the positive electrode plate), the first separator 3, the second electrode plate 2 (the negative electrode plate), and the second separator 4 are moved towards a scroll wheel 7 and alternately wound. When the winding ends, the second separator 4 is at the outermost side, as shown in FIG. 1.

### Preparation of a lithium-ion battery

The resulting electrode assembly after winding was placed in a housing of an outer packing aluminum-plastic film, leaving a liquid injection hole. After the steps of injecting the electrolyte into the liquid injection hole, packaging, chemical conversion, and capacitance, the lithium-ion battery was obtained.

### Example 2

FIG. 4 shows an electrode assembly of an electrochemical apparatus according to this example. A difference from the electrochemical apparatus in Example 1 was that the electrochemical apparatus in Example 2 had only one surface of the first porous substrate 30 provided with a polymer bonding layer 31. In addition, one surface of the second porous substrate 40 closer to the second electrode plate 2 was coated with a polymer bonding layer 41, as shown in FIG. 4.

### Example 3

A difference from the electrochemical apparatus in Example 1 was that only one surface of the first porous substrate 30 was provided with a polymer bonding layer 31, and an inorganic material layer 34 was arranged between the first porous substrate 30 and the polymer bonding layer 32, as shown in FIG. 5.

### Example 4

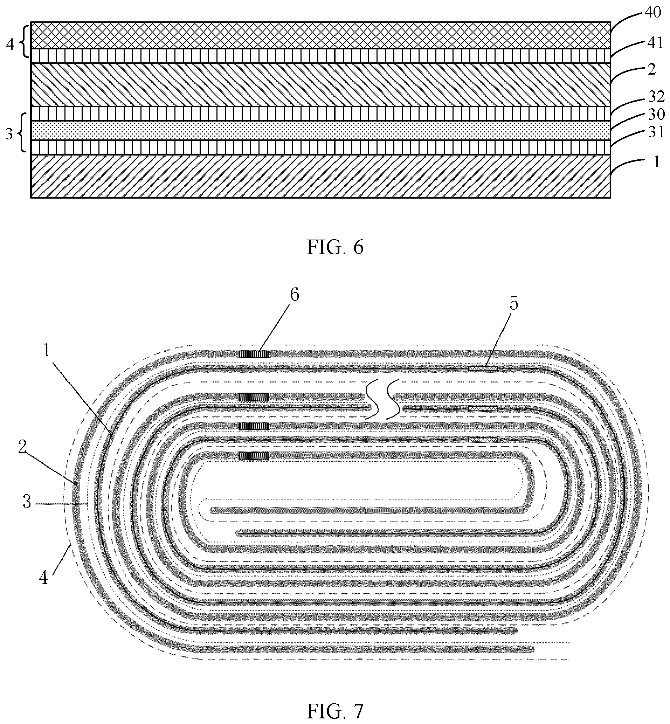

A difference from the electrochemical apparatus in Example 1 was that one surface of the second porous substrate 40 closer to the second electrode plate 2 was coated with a polymer bonding layer 41, as shown in FIG. 6.

### Example 5

A difference from the electrochemical apparatus in Example 1 was that tabs were only arranged on the first electrode plate at all layers and the second electrode plate at all layers on one side of a wound electrode assembly, to form a one-side multi-tab structure, and the first separator 3 and the second separator 4 were not connected to each other, as shown in FIG. 7.

### Example 6

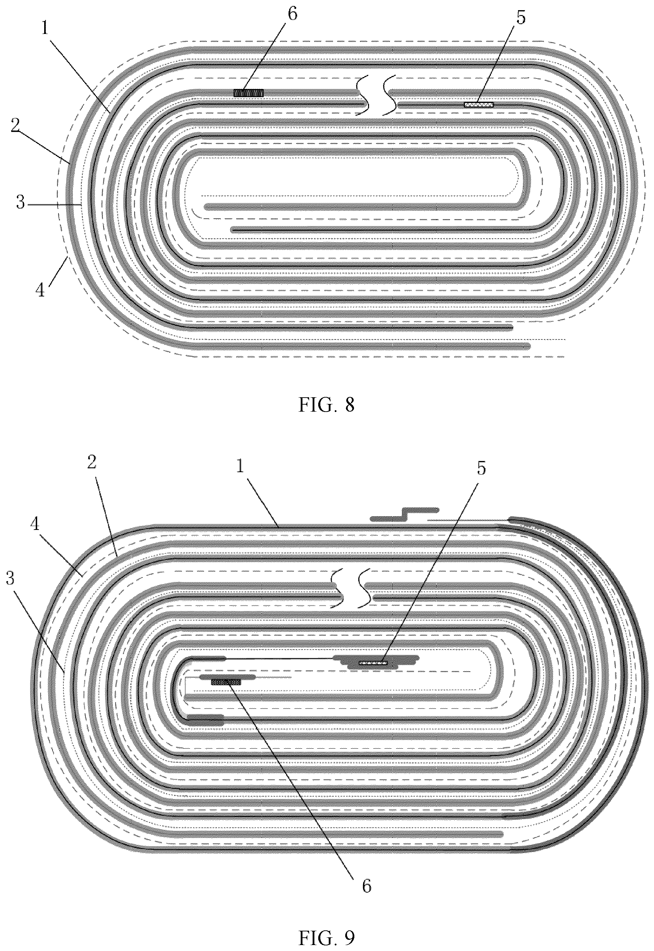

A difference from the electrochemical apparatus in Example 1 was that tabs were only arranged in the middle part of the positive electrode plate and the negative electrode plate on one side of the wound electrode assembly, and the first separator 3 and the second separator 4 were not connected to each other, as shown in FIG. 8.

### Example 7

A difference from the electrochemical apparatus in Example 1 was that the wound electrode assembly ended with the first electrode 1 (the positive electrode plate) on the outermost side, and a positive tab and a negative tab were respectively provided on the heads of the positive electrode plate and the negative electrode plate of the wound electrode assembly (a single-tab structure), as shown in FIG. 9.

### Example 8

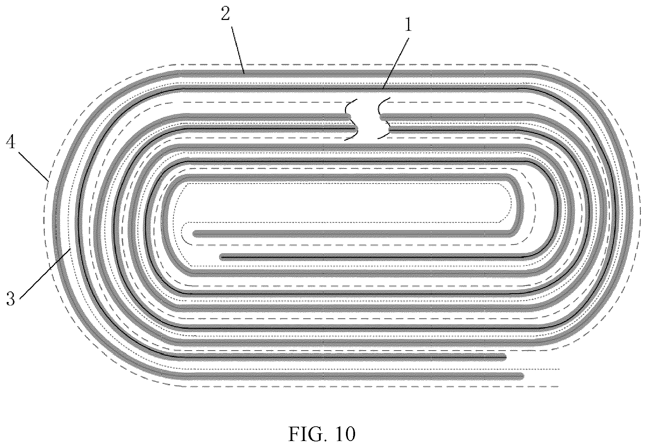

A difference from the electrochemical apparatus in Example 1 was that the wound electrode assembly had a full tab structure, that is, only foil zones without an active material were reserved without any cut tabs, as shown in FIG. 10.

### Comparative Example 1

A difference from the electrochemical apparatus in Example 1 was that the first porous substrate 30 was used as a first separator 3 and the second porous substrate 40 was used as a second separator 4.

### Comparative Example 2

A difference from the electrochemical apparatus in Example 1 was that both surfaces of the first porous substrate 30 of the first separator 3 were coated with a polymer bonding layer, and both surfaces of the second porous substrate 40 of the second separator 4 were coated with a polymer bonding layer.

A state of the electrode assembly after cold pressing, a state of the electrode assembly after being fully charged, a color difference of a fully charged interface, and gel dissolution in a chemical conversion process in Example 1 to Example 8, Comparative Example 1 and Comparative Example 2 were observed. The results were shown in Table 1.

**Table 1**

| Example | Electrode assembly state after cold pressing | Electrode assembly state after full charge | Gel generation |
|---|---|---|---|
| Example 1 | Very good shaping | No deformation | No gel |
| Example 2 | Good shaping | No deformation | No gel |
| Example 3 | Good shaping | No deformation | No gel |
| Example 4 | Very good shaping | No deformation | No gel |
| Example 5 | Very good shaping | No deformation | No gel |
| Example 6 | Very good shaping | No deformation | No gel |
| Example 7 | Very good shaping | No deformation | No gel |
| Example 8 | Very good shaping | No deformation | No gel |
| Comparative Example 1 | No shaping effect | S-shaped deformation | No gel |
| Comparative Example 2 | Very good shaping | Slight deformation | Gel generated |

As can be learned from Table 1, the wound electrode assembly in this application had a good shaping effect after cold pressing. Because the second separator was provided with no polymer bonding layer, no gel was generated during the chemical conversion process of the battery. In addition, the cost of a polymer binder accounts for 30% of the total cost of a separator of the existing lithium-ion batteries. This application uses a first separator (a separator with a coating) and a second separator, which can significantly reduce usage of the polymer binder, thereby significantly reducing costs of a lithium-ion battery.

The following analyzes how an area density of a polymer bonding layer affects performance of an electrode assembly.

### Example 9

A difference from the electrochemical apparatus in Example 5 was that the area density of the polymer bonding layer was 5mg/1540.25mm², and neither surface of the second separator was provided with a polymer bonding layer.

### Example 10

A difference from the electrochemical apparatus in Example 5 was that the area density of the polymer bonding layer was 10mg/1540.25mm², and neither surface of the second separator was provided with a polymer bonding layer.

### Example 11

A difference from the electrochemical apparatus in Example 1 was that the area density of the polymer bonding layer was 0.3mg/1540.25mm², and neither surface of the second separator was provided with a polymer bonding layer.

### Example 12

A difference from the electrochemical apparatus in Example 1 was that the area density of the polymer bonding layer was 15mg/1540.25mm², and neither surface of the second separator was provided with a polymer bonding layer.

Electrode assemblies with different area densities of the polymer bonding layer were tested. Test results are shown in Table 2.

**Table 2**

| Example | Area density of polymer bonding layer (mg/1540.25mm²) | Cycle performance (cycles) | Energy density (kwh/L) | Electrode assembly state after cold pressing |
|---|---|---|---|---|
| Example 5 | 0.5 | 735 | 706 | Good shaping |
| Example 9 | 5 | 766 | 689 | Very good shaping |
| Example 10 | 10 | 788 | 675 | Very good shaping |
| Example 11 | 0.3 | 634 | 711 | No shaping effect |
| Example 12 | 15 | 769 | 652 | Very good shaping |

As can be learned from Table 2, when the area density of the polymer bonding layer was in a range of 0.5 mg/1540.25mm² to 10 mg/1540.25mm², a good shaping effect could be obtained, and the lithium-ion battery could have a high energy density. When the area density of the polymer bonding layer was lower than 0.5 mg/1540.25mm², the lithium-ion battery had a poor shaping effect due to an excessively small amount of the polymer binder; when the area density of the polymer bonding layer was lower than 10 mg/1540.25mm², a good shaping effect was obtained, but the energy density of the lithium-ion battery decreased.

This application further provides an electronic apparatus, including the electrochemical apparatus in this application. The electronic apparatus may be a smartphone, an electric vehicle, an electric bicycle, a notebook computer, a camera, an electric toy, a drone, or the like.

According to the disclosure of this specification, a person skilled in the art of this application may further make appropriate changes or modifications to the foregoing embodiments. Therefore, this application is not limited to the foregoing disclosure and the described embodiments, and some changes or modifications to this application shall also fall within the protection scope of the claims of this application.

## Claims

1. A lithium-ion battery, comprising a soft packaging and an electrode assembly disposed in the soft packaging,
the electrode assembly having a winding structure and comprising: a first electrode plate (1), a second electrode plate (2), a first separator (3), and a second separator (4); wherein the first separator (3) comprises a first porous substrate (30), the second separator (4) comprises a second porous substrate (40); the first electrode plate (1), the first separator (3), the second electrode plate (2) and the second separator (4) are stacked in that sequence and an outermost circle of the electrode assembly is the second porous substrate (40); and at least one surface of the first porous substrate (30) is provided with a polymer bonding layer (31, 32), and neither surface of the second porous substrate (40) is provided with a polymer bonding layer (41).

2. The lithium-ion battery according to claim **1,** wherein both surfaces of the first porous substrate (30) are provided with a polymer bonding layer (31, 32).

3. The lithium-ion battery according to claim **1,** wherein only one surface of the first porous substrate (30) is provided with a polymer bonding layer (31, 32).

4. The lithium-ion battery according to any one of claims **1** to **3,** wherein an inorganic material layer (34) is further arranged between the first porous substrate (30) and the polymer bonding layer (32).

5. The lithium-ion battery according to claim **4,** wherein a surface of the second porous substrate (40) is provided with no inorganic material layer (34).

6. The lithium-ion battery according to claim **1,** wherein the first electrode plate (1) is a positive electrode plate and the second electrode plate (2) is a negative electrode plate; or the first electrode plate (1) is a negative electrode plate and the second electrode plate (2) is a positive electrode plate.

7. The lithium-ion battery according to any one of claims **1** to **3,** wherein an area density of the polymer bonding layer (31, 32, 41) is 0.5mg/1540.25mm² to 10mg/1540.25mm².

8. The lithium-ion battery according to any one of claims **1** to **3,** wherein the first porous substrate (30) and the second porous substrate (40) are each independently a polymer film, a multilayer polymer film, or a non-woven fabric composed of at least one polymer selected from the following: polyethylene, polypropylene, polyethylene terephthalate, polydiformylphenylenediamine, polybutylene terephthalate, polyester, polyacetal, polyamide, polycarbonate, polyimide, polyether-ether-ketone, polyetherketoneketone, polyether ketone, polyamideimide, PBI, polyethersulfone, polyphenylene oxide, cycloolefin copolymers, polyphenylene sulfide, or polyvinyl naphthaline.

9. The lithium-ion battery according to claim **1,** wherein the polymer bonding layer (31, 32, 41) comprises a polymer, and the polymer comprises at least one of the following: vinylidene fluoride-hexafluoropropylene copolymer, vinylidene fluoride-trichloroethylene copolymer, polyacrylate, polyacrylic acid, polyvinylpyrrolidone, polyacrylonitrile, polyvinylpyrrolidone, polyvinyl acetate, ethylene-acetic acid ethen copolymer, polyimide, polyoxyethylene, cellulose acetate, cellulose acetate butyrate, cellulose acetate propionate, cyanoethyl amylopectin, cyanethyl polyvinyl alcohol, cyanoethyl cellulose, cyanethyl sucrose, amylopectin, carboxymethyl cellulose, sodium carboxymethyl cellulose, lithium carboxymethyl cellulose, acrylonitrile-styrene-butadiene copolymer, polyvinyl alcohol, butadiene-styrene copolymer, or polyvinylidene fluoride.

10. The lithium-ion battery according to claim **4** or **5,** wherein the inorganic material layer (34) comprises an inorganic particle, and the inorganic particle comprises at least one of the following: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, titanium lithium phosphate, or lanthanum titanate lithium.

11. An electronic apparatus, comprising the lithium-ion battery electrochemical apparatus according to any one of claims **1** to **10.**

## Patentansprüche

1. Lithium-Ionen-Batterie, umfassend eine weiche Verpackung und eine in der weichen Verpackung angeordnete Elektrodenbaugruppe,
wobei die Elektrodenbaugruppe eine Wickelstruktur aufweist und Folgendes umfasst: eine erste Elektrodenplatte (1), eine zweite Elektrodenplatte (2), einen ersten Separator (3) und einen zweiten Separator (4); wobei der erste Separator (3) ein erstes poröses Substrat (30) umfasst, der zweite Separator (4) ein zweites poröses Substrat (40) umfasst; die erste Elektrodenplatte (1), der erste Separator (3), die zweite Elektrodenplatte (2) und der zweite Separator (4) in dieser Reihenfolge gestapelt sind und ein äußerster Kreis der Elektrodenbaugruppe das zweite poröse Substrat (40) ist; und mindestens eine Oberfläche des ersten porösen Substrats (30) mit einer Polymerverbindungsschicht (31, 32) versehen ist, und keine Oberfläche des zweiten porösen Substrats (40) mit einer Polymerverbindungsschicht (41) versehen ist.

2. Lithium-Ionen-Batterie nach Anspruch **1,** wobei beide Oberflächen des ersten porösen Substrats (30) mit einer Polymerverbindungsschicht (31, 32) versehen sind.

3. Lithium-Ionen-Batterie nach Anspruch **1,** wobei nur eine Oberfläche des ersten porösen Substrats (30) mit einer Polymerverbindungsschicht (31, 32) versehen ist.

4. Lithium-Ionen-Batterie nach einem der Ansprüche **1** bis **3,** wobei eine anorganische Materialschicht (34) weiter zwischen dem ersten porösen Substrat (30) und der Polymerverbindungsschicht (32) angeordnet ist.

5. Lithium-Ionen-Batterie nach Anspruch **4,** wobei eine Oberfläche des zweiten porösen Substrats (40) ohne anorganische Materialschicht (34) versehen ist.

6. Lithium-Ionen-Batterie nach Anspruch **1,** wobei die erste Elektrodenplatte (1) eine positive Elektrodenplatte ist und die zweite Elektrodenplatte (2) eine negative Elektrodenplatte ist; oder die erste Elektrodenplatte (1) eine negative Elektrodenplatte ist und die zweite Elektrodenplatte (2) eine positive Elektrodenplatte ist.

7. Lithium-Ionen-Batterie nach einem der Ansprüche **1** bis **3,** wobei eine Flächendichte der Polymerverbindungsschicht (31, 32, 41) 0,5 mg/1540,25 mm² bis 10 mg/1540,25 mm² beträgt.

8. Lithium-Ionen-Batterie nach einem der Ansprüche **1** bis **3,** wobei das erste poröse Substrat (30) und das zweite poröse Substrat (40) jeweils unabhängig voneinander eine Polymerfolie, eine mehrschichtige Polymerfolie oder ein Vliesstoff sind, der aus mindestens einem Polymer besteht, das aus dem Folgenden ausgewählt ist: Polyethylen, Polypropylen, Polyethylenterephthalat, Polydiformylphenylendiamin, Polybutylenterephthalat, Polyester, Polyacetal, Polyamid, Polycarbonat, Polyimid, Polyetheretherketon, Polyetherketonketon, Polyetherketon, Polyamidimid, PBI, Polyethersulfon, Polyphenylenoxid, Cycloolefin-Copolymere, Polyphenylensulfid oder Polyvinylnaphthalin.

9. Lithium-Ionen-Batterie nach Anspruch 1, wobei die Polymerverbindungsschicht (31, 32, 41) ein Polymer umfasst und das Polymer mindestens eines der folgenden umfasst: Vinylidenfluorid-Hexafluorpropylen-Copolymer, Vinylidenfluorid-Trichlorethylen-Copolymer, Polyacrylat, Polyacrylsäure, Polyvinylpyrrolidon, Polyacrylonitril, Polyvinylpyrrolidon, Polyvinylacetat, Ethylen-Essigsäure-Ethen-Copolymer, Polyimid, Polyoxyethylen, Celluloseacetat, Celluloseacetatbutyrat, Celluloseacetatpropionat, Cyanoethylamylopektin, Cyanethylpolyvinylalkohol, Cyanoethylcellulose, Cyanethylsucrose, Amylopectin, Carboxymethylcellulose, Natriumcarboxymethylcellulose, Lithiumcarboxymethylcellulose, Acrylnitril-StyrolButadien-Copolymer, Polyvinylalkohol, Butadien-Styrol-Copolymer oder Polyvinylidenfluorid.

10. Lithium-Ionen-Batterie nach Anspruch **4** oder **5,** wobei die anorganische Materialschicht (34) ein anorganisches Partikel umfasst, und das anorganische Partikel mindestens eines der folgenden umfasst: Siliziumdioxid, Aluminiumoxid, Titanoxid, Zinkoxid, Magnesiumoxid, Hafniumdioxid, Zinnoxid, Zirkonoxid, Yttriumoxid, Siliziumkarbid, Bochmit, Magnesiumhydroxid, Aluminiumhydroxid, Calciumtitanat, Bariumtitanat, Lithiumphosphat, Titan-Lithium-Phosphat oder Lanthan-Titan-Lithium.

11. Elektronische Vorrichtung, die die elektrochemische Vorrichtung mit der Lithium-Ionen-Batterie nach einem der Ansprüche **1** bis **10** umfasst.

## Revendications

1. Batterie lithium-ion, comprenant un emballage souple et un ensemble d'électrodes disposé dans l'emballage souple,
l'ensemble d'électrodes ayant une structure enroulée et comprenant : une première plaque d'électrode (1), une deuxième plaque d'électrode (2), un premier séparateur (3) et un deuxième séparateur (4) ; dans laquelle le premier séparateur (3) comprend un premier substrat poreux (30), le deuxième séparateur (4) comprend un deuxième substrat poreux (40) ; la première plaque d'électrode (1), le premier séparateur (3), la deuxième plaque d'électrode (2) et le deuxième séparateur (4) sont empilés dans cet ordre, et un cercle le plus extérieur de l'ensemble d'électrodes est le deuxième substrat poreux (40) ; et au moins une surface du premier substrat poreux (30) est pourvue d'une couche de liaison polymère (31, 32), et aucune des surfaces du deuxième substrat poreux (40) n'est pourvue d'une couche de liaison polymère (41).

2. Batterie lithium-ion selon la revendication **1,** dans laquelle les deux surfaces du premier substrat poreux (30) sont pourvues d'une couche de liaison polymère (31, 32).

3. Batterie lithium-ion selon la revendication **1,** dans laquelle seule une surface du premier substrat poreux (30) est pourvue d'une couche de liaison polymère (31, 32).

4. Batterie lithium-ion selon l'une quelconque des revendications **1** à **3,** dans laquelle une couche de matériau inorganique (34) est en outre disposée entre le premier substrat poreux (30) et la couche de liaison polymère (32).

5. Batterie lithium-ion selon la revendication **4,** dans laquelle une surface du deuxième substrat poreux (40) est dépourvue de couche de matériau inorganique (34).

6. Batterie lithium-ion selon la revendication **1,** dans laquelle la première plaque d'électrode (1) est une plaque d'électrode positive et la deuxième plaque d'électrode (2) est une plaque d'électrode négative ; ou la première plaque d'électrode (1) est une plaque d'électrode négative et la deuxième plaque d'électrode (2) est une plaque d'électrode positive.

7. Batterie lithium-ion selon l'une quelconque des revendications **1** à **3,** dans laquelle la densité de surface de la couche de liaison polymère (31, 32, 41) est comprise entre 0,5 mg/1540,25 mm² et 10 mg/1540,25 mm².

8. Batterie lithium-ion selon l'une quelconque des revendications **1** à **3,** dans laquelle le premier substrat poreux (30) et le deuxième substrat poreux (40) sont chacun indépendamment un film polymère, un film polymère multicouche, ou un tissu non tissé composé d'au moins un polymère choisi parmi les suivants : polyéthylène, polypropylène, polyéthylène téréphtalate, polydiformylphénylènediamine, polybutylène téréphtalate, polyester, polyacétal, polyamide, polycarbonate, polyimide, polyéther-éther-cétone, polyéthercétonecétone, polyéthercétone, polyamideimide, PBI, polyéthersulfone, polyphénylène oxyde, copolymères de cyclooléfine, polyphénylène sulfure ou polyvinyl naphtalène.

9. Batterie lithium-ion selon la revendication **1,** dans laquelle la couche de liaison polymère (31, 32, 41) comprend un polymère, et le polymère comprend au moins l'un des éléments suivants : copolymère de fluorure de vinylidène et d'hexafluoropropylène, copolymère de fluorure de vinylidène et de trichloroéthylène, polyacrylate, acide polyacrylique, polyvinylpyrrolidone, polyacrylonitrile, polyvinylpyrrolidone, polyvinylacétate, copolymère d'éthylène-acide acétique-éthène, polyimide, polyoxyéthylène, acétate de cellulose, butyrate d'acétate de cellulose, propionate d'acétate de cellulose, cyanoéthyl amylopectine, alcool polyvinylique cyanoéthyle, cyanoéthyl cellulose, cyanoéthyl saccharose, amylopectine, carboxyméthylcellulose, carboxyméthylcellulose sodique, carboxyméthylcellulose lithique, copolymère d'acrylonitrile-styrène-butadiène, alcool polyvinylique, copolymère de butadiène-styrène ou fluorure de polyvinylidène.

10. Batterie lithium-ion selon la revendication **4** ou **5,** dans laquelle la couche de matériau inorganique (34) comprend une particule inorganique, et la particule inorganique comprend au moins l'un des éléments suivants : dioxyde de silicium, oxyde d'aluminium, oxyde de titane, oxyde de zinc, oxyde de magnésium, dioxyde de hafnium, oxyde d'étain, oxyde de zirconium, oxyde d'yttrium, carbure de silicium, boehmite, hydroxyde de magnésium, hydroxyde d'aluminium, titanate de calcium, titanate de baryum, phosphate de lithium, phosphate de titane et de lithium, ou titanate de lanthane et de lithium.

11. Appareil électronique, comprenant l'appareil électrochimique batterie lithium-ion selon l'une quelconque des revendications **1** à **10.**
